# EUROPEAN PATENT SPECIFICATION

(11) **EP 2 826 295 B1**
(45) Date of publication and mention of the grant of the patent: **11.07.2018**
(21) Application number: 13716076.8
(22) Date of filing: 13.03.2013
(51) Int. Cl.: H04W 36/00, H04W 24/10, H04W 36/14, H04W 48/18

(54) **NETWORK TRIGGERED MEASUREMENTS AND MEASUREMENT REPORTS BY USER EQUIPMENT**
NETZWERK-AUSGELÖSTE MESSUNGEN UND MESSBERICHTE DURCH EINE BENUTZERENDVORRICHTUNG
MESURES ACTIVÉES PAR LE RÉSEAU ET RAPPORTS DE MESURE PAR UN ÉQUIPEMENT D'UTILISATEUR

(30) Priority: 16.03.2012 US 201261611820 P
(43) Date of publication of application: 21.01.2015
(73) Proprietor: Telefonaktiebolaget LM Ericsson (publ), 164 83 Stockholm (SE)
(72) Inventor: PRADAS, Jose Luis, S-11622 Stockholm (SE); MELIN, Lena, S-185 39 Vaxholm (SE); BRISMAR, Sofia, S-181 61 Lidingö (SE)
(74) Representative: Ericsson
(86) International application number: PCT/SE2013/050228
(87) International publication number: WO 2013/137811

(56) References cited:
- EP-A1- 2 369 869
- WO-A2-2012/138283
- NOKIA SIEMENS NETWORKS: "Network Controlled CELL_FACH mobility", 3GPP DRAFT; R2-120316 NERWORK CONTROLLED MOBILITY, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Dresden, Germany; 20120202 - 20120206, 31 January 2012 (2012-01-31), XP050565369, [retrieved on 2012-01-31]
- "3rd Generation Partnership Project; Technical Specification Group Radio Access Network; Radio Resource Control (RRC); Protocol specification (Release 10)", 3GPP STANDARD; 3GPP TS 25.331, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. V10.6.0, 22 December 2011 (2011-12-22), pages 1-1885, XP050555146, [retrieved on 2011-12-22]
- HUAWEI ET AL: "Discussion on CELL_FACH mobility enhancement to LTE", 3GPP DRAFT; R2-120584 DISCUSSION ON CELL_FACH MOBILITY ENHANCEMENT TO LTE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Dresden, Germany; 20120206 - 20120210, 31 January 2012 (2012-01-31), XP050565456, [retrieved on 2012-01-31]
- HUAWEI ET AL: "Discussion on CELL_FACH mobility enhancement to LTE", 3GPP DRAFT; R2-122328 DISCUSSION ON CELL_FACH MOBILITY ENHANCEMENT TO LTE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Prague; 20120521 - 20120525, 14 May 2012 (2012-05-14), XP050606917, [retrieved on 2012-05-14]
- ERICSSON ET AL: "Network controlled mobility in CELL_FACH state", 3GPP DRAFT; R2-121796_NW_CONTROL_MOBILITY_V10, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Jeju, South Korea; 20120326 - 20120330, 20 March 2012 (2012-03-20), XP050606476, [retrieved on 2012-03-20]
- ERICSSON ET AL: "Network controlled mobility in CELL_FACH state", 3GPP DRAFT; R2-122122_NW_CONTROL_MOBILITY_V10, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Prague, Czech Republic; 20120521 - 20120525, 15 May 2012 (2012-05-15), XP050607142, [retrieved on 2012-05-15]

## Description

### TECHNICAL FIELD

The present invention relates to communications systems. More particularly, and not by way of limitation, the present invention is directed to controlling measurements and related measurement reporting by user equipment nodes within communications systems.

### BACKGROUND

The Universal Mobile Telecommunications System (UMTS) is a third generation mobile communication system, which evolved from the Global System for Mobile Communications (GSM), and is intended to provide improved mobile communication services based on Wideband Code Division Multiple Access (WCDMA) technology. UTRAN, short for UMTS Terrestrial Radio Access Network, is a collective term for the Node B's and Radio Network Controllers which make up the UMTS radio access network. Thus, UTRAN is essentially a radio access network using wideband code division multiple access for user equipment nodes (UEs).

The Third Generation Partnership Project (3GPP) has undertaken to further evolve the UTRAN and GSM based radio access network technologies. In this regard, specifications for the Evolved Universal Terrestrial Radio Access Network (E-UTRAN) are ongoing within 3GPP. The Evolved Universal Terrestrial Radio Access Network (E-UTRAN) comprises the Long Term Evolution (LTE) and System Architecture Evolution (SAE).

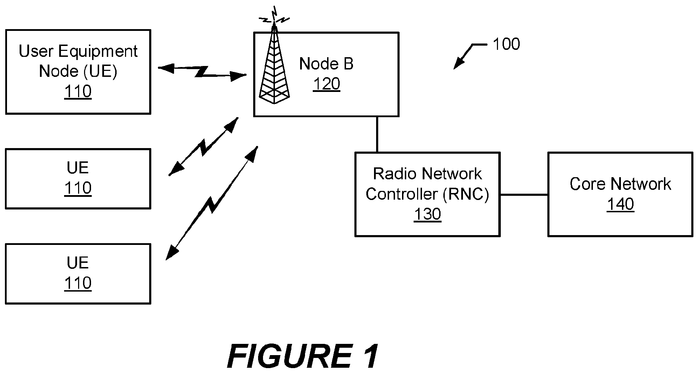

An example UTRAN system 100 is shown in Figure 1. The system 100 includes a plurality of UEs 110 that communicate with a Node B 120 (e.g., radio transceiver base station) through a radio air interface. The Node B 120 is controlled by a radio network controller (RNC) 130 and connected to a core network 140.

An enhanced uplink transmission capability from the UEs 110 to the Node B 120 is provided for improved uplink packet-data support with reduced round trip delay, high bit-rate availability and increased cell capacity. While operating in a Radio Resource Control (RRC) CELL_DCH (Dedicated CHannel) state, a network node allocates dedicated resources for each UE 110. Enhanced uplink transmission in a CELL FACH (Forward Access CHannel) state and an IDLE_MODE state is also allowed. The UEs 110 can switch between the states CELL_FACH and CELL_DCH to utilize common enhanced uplink resources that are setup by the network node for transmission of data on an enhanced dedicated physical control channel (E-DPDCH).

While a UE 110 transmits data on the E-DPDCH in state CELL_FACH, it utilizes a common network resource. When the UE 110 needs to make use of the resource for a longer time, the RNC 130 can switch the UE 110 from the state CELL FACH to the state CELL_DCH.

The UEs 110 perform measurements and report the measurements to the Node B 120 to, for example, assist with mobility decisions. Dedicated Inter Radio Access Technology (IRAT) measurements in CELL_FACH is not standardized, however measurements on GSM can be performed by a UE as part of the UE based cell reselection mechanism. For measurements on Evolved Universal Terrestrial Radio Access (E-UTRA) there is currently no mechanism specified for measurements in CELL_FACH.

In Release 11, the Work Item "Further Enhancements for CELL_FACH" includes the sub-feature "mobility enhancements from CELL_FACH state to LTE (or E-UTRA)". The objective of this subfeature is to enhance mobility from CELL_FACH state to E-UTRA.

Current proposed measurements in CELL_FACH can cause continuous measurements to be performed by a UE. However, the continuous UE measurements consume power and, thereby, reduce battery life. Moreover, the continuous UE measurements may also delay any ongoing IF and/or GSM measurements in CELL_FACH used for cell reselection. If UEs are configured with E-UTRA measurements in CELL_FACH, there may be a significant UL signaling load and an increased system interference because the UEs will use either the RACH or common E-DCH resources to transmit the measurement reports. This can reduce system accessibility.

The approaches described in this section could be pursued, but are not necessarily approaches that have been previously conceived or pursued. Therefore, unless otherwise indicated herein, the approaches described in this section are not prior art to the claims in this application and are not admitted to be prior art by inclusion in this section.

"Network Controlled CELL_FACH mobility" in 3GPP DRAFT, R2-120316 Network Controlled Mobility, 3RD Generation Partnership Project (3GPP), describes a scheme to handle mobility to LTE from the CELL_FACH state with network control.

### SUMMARY

Some embodiments of inventive concepts disclosed herein are directed to managing when and how measurements are performed and communicated from a user equipment node (UE) to a network node. Some methods and operations by UEs and network nodes disclosed herein cause the UE to perform measurements and report the measurements when requested by the network node. These methods and operations may conserve battery power within the UE. Moreover, when the network node desires measurement information, the network node can, at that time, request the UE to perform measurements and to report them. These methods and operations may also reduce the signaling load in the network and reduce the uplink interference due to signaling. Moreover, these methods and operations may assist the network node with requesting measurement reports during a time when it is determined that there are sufficient available resources in the network. Because the measurement can be performed quickly upon request, the service interruption can be reduced and the measured result can be quickly delivered to the network node. Because the network node can control when a one-shot measurement is performed by the UE, the network node can utilize its knowledge of activity level in the UE to choose a time when the measurement will impact the service the least.

A first aspect of the invention comprises a method of operating a user equipment node, UE, to perform measurements in a communications system, as set forth in claim 1.

A second aspect of the invention comprises a a user equipment node, UE, for performing measurements in a communications system, as set forth in claim 6.

Preferred embodiments are defined in the dependent claims.

The embodiments and/or examples of the following description which are not covered by the appended claims are considered as not being part of the present invention."

A part of the description herein is directed to a method of operating a network node to control measurements by a UE in a communications system. The method includes communicating a measurement configuration message to the UE that configures a measurement that is to be performed by the UE to generate a measurement report. The measurement report is received from the UE.

In a further embodiment, communicating the measurement configuration message to the UE includes, communicating the measurement configuration message as an explicit indication to the UE to proceed with performing the measurement defined by the measurement configuration message to generate the measurement report. The measurement configuration message can define a reporting criteria that triggers the UE to communicate the measurement report to the network node when the reporting criteria is fulfilled. The reporting criteria may be a threshold value that the UE compares to the measurement to determine whether to communicate the measurement report to the network node.

In a further embodiment, a command is communicated to the UE to switch to CELL_FACH state, which triggers the UE to perform the measurement defined by the measurement configuration message. An explicit indication is then communicated to the UE to proceed with communicating the measurement report to the network node.

In a further embodiment, following communication of the measurement configuration message, an explicit indication is communicated to the UE to trigger performance of the measurement configured by the measurement configuration message and communication of the measurement report to the network node.

Other parts of the description herein are directed to corresponding methods of operating a UE to perform measurements in a communications system. One method includes receiving a measurement configuration message from a network node that configures a measurement that is to be performed by the UE. The measurement defined by the measurement configuration message is performed. A measurement report based on the measurement is communicated to the network node.

In a further embodiment, the measurement defined by the measurement configuration message is performed in response to receipt of the measurement configuration message. The measurement configuration message may define a reporting criteria that triggers the UE to communicate the measurement report to the network node when the reporting criteria is fulfilled. The measurement configuration message may define a threshold value (e.g. signal strength), and communication of the measurement report to the network node is performed in response to comparison of the threshold value to the measurement (e.g. measurement of signal strength exceeding the threshold value).

In a further embodiment, a command is received from the network node for the UE (110) to switch to CELL_FACH state. The measurement defined by the measurement configuration message is performed in response to receipt of the command. In explicit indication is received from the network node to proceed with communicating the measurement report to the network node. The measurement report is communicated to the network node responsive to receipt of the explicit indication.

It is noted that aspects described with respect to one embodiment may be incorporated in different embodiments although not specifically described relative thereto. That is, all embodiments and/or features of any embodiments can be combined in any way and/or combination. Moreover, other systems, methods, and/or computer program products according to embodiments will be or become apparent to one with skill in the art upon review of the following drawings and detailed description. It is intended that all such additional systems, methods, and/or computer program products be included within this description, be within the scope of the present invention, and be protected by the accompanying claims. Even though embodiments have been summarized above, the claimed embodiments are defined by the accompanying claims 1-6.

### BRIEF DESCRIPTION OF THE DRAWINGS

The accompanying drawings, which are included to provide a further understanding of the disclosure and are incorporated in and constitute a part of this application, illustrate certain non-limiting embodiment(s) of the invention. In the drawings:
Figure 1 is a block diagram of a communications system that controls measurement reports sent by UEs to a Node B;
Figures 2-7 are flowcharts of operations and methods for controlling measurement reports sent by a UE to a Node B;
Figure 8 is a block diagram of a UE configured according to some embodiments of the present invention; and
Figure 9 is a block diagram of a network node configured according to some embodiments of the present invention.

### DETAILED DESCRIPTION

In the following detailed description, numerous specific details are set forth in order to provide a thorough understanding of the invention. However, it will be understood by those skilled in the art that the present invention may be practiced without these specific details. In other instances, well-known methods, procedures, components and circuits have not been described in detail so as not to obscure the present invention.

It is further noted that although terminology from 3GPP UTRAN is used in this disclosure to exemplify embodiments of the invention, this does not limit the scope of the invention to only those systems. Other wireless systems may also benefit from exploiting embodiments of the present invention disclosed herein. Accordingly, although various embodiments are described in the context of controlling measurements by a UE and reporting of the measurements to a Node B based on the UTRAN standards, the scope of the invention is not limited thereto.

It is further noted that terminology such as Node B (also referred to as a network node, base station, or Evolved Node B) and UE (also referred to as a wireless terminal) should be considering non-limiting and does not imply a certain hierarchical relation between the two. In general a Node B and a UE may be considered as examples of respective different communication nodes that communicate with each other over a wireless radio channel.

Reference is again made to the system of Figure 1, to explain how the illustrated elements are now configured to operate according to various embodiments of the present invention. Although various embodiments are described in the context of the UTRAN system 100 of Figure 1, the invention is not limited thereto.

Some embodiments of the present invention may arise from the present realization that at least some of the above mentioned disadvantages may be overcome by configuring the Radio Network Controller (RNC) 130, the Node B 120, and/or another network node to send an explicit indication (message) to the UE 110 to perform a defined measurement and to send a corresponding measurement report back to the Node B 120. Similarly, the UE 110 is configured to receive the explicit indication and respond thereto by performing the measurement and sending the measurement report. Hence, the UE 110 only measures and sends a measurement report when requested by the Node B 120.

Although various embodiments are described in the context of the Node B 120 triggering the generation of a measurement report from the UE 110, in other embodiments the RNC 130 or another network node may operate to trigger the generation of a measurement report from the UE 110. Thus, various operations and methods attributed below to the Node B 120 may alternatively or additionally be performed by the RNC 130 and/or another network node of the system. Moreover, the measurements that are described below as being communicated to the Node B 120, may be forwarded (as-is or modified) to the RNC 130 and/or another network node to perform responsive functionality.

In accordance with some embodiments, the Node B 120 configures the measurements that will be performed by the UE 110 while the UE 110 is operating in the CELL_FACH state, and controls when the UE 110 will perform the actual measurement according to the measurement configuration and reports the measurement to the Node B 120.

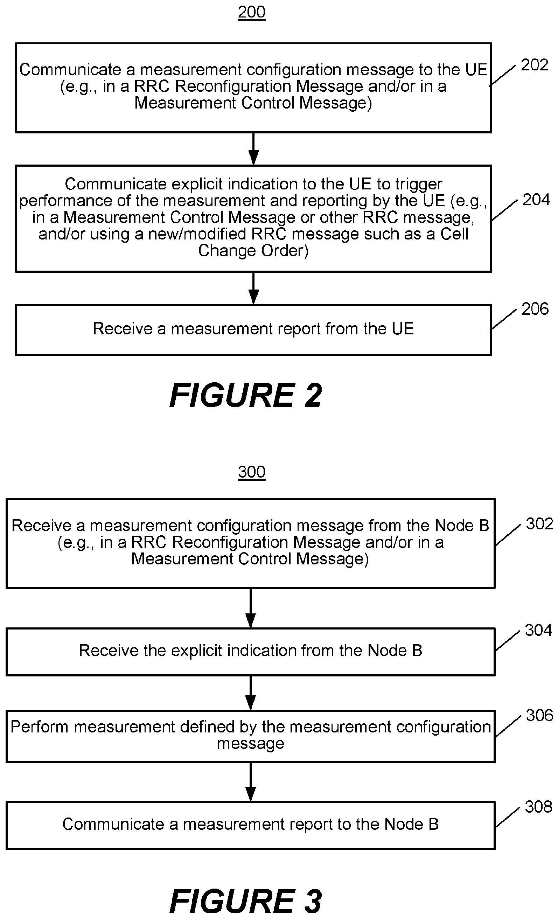

Figure 2 illustrates operations and methods 200 that can be performed by the Node B 120, and Figure 3 illustrates corresponding operations and methods 300 that can be performed by the UE 110. Referring to Figures 2 and 3, the Node B 120 communicates (block 202) a measurement configuration message to the UE 110, which can be communicated as part of a RRC Reconfiguration Message and/or in a Measurement Control Message. The UE 110 performs one or more measurements that are defined by the measurement configuration message. The measurement configuration message may include a measurement ID and type, a command (setup, modify, or release), the measurement objects and quantity, the reporting quantities, criteria (event-triggered), and mode (acknowledged/ unacknowledged).

The UE 110 correspondingly receives (block 302) the measurement configuration message which it may use to control the type of measurement it performs, which may include one or more of the following:
- Intra-frequency measurements on downlink (DL) physical channels at the same frequency as an active set;
- Inter-frequency measurements on DL physical channels at frequencies that differ from the frequency of the active set;
- Inter-system measurements on DL physical channels belonging to another radio access system, e.g. GSM;
- Traffic volume measurements on uplink (UL) traffic volume;
- Quality measurements, DL transport block error rate; and
- Internal measurements, UE transmission power and UE received signal level.

The Node B 120 also communicates (block 204) an explicit indication (e.g., message containing a defined command) to cause the UE 110 to perform the measurement. The explicit indication may be communicated using a Measurement Control Message or other RRC message, and/or using a new/modified RRC message such as a Cell Change Order.

The UE 110 correspondingly receives (block 304) the explicit indication from the Node B 120, and performs (block 306) the measurement defined by the measurement configuration message.

The measurement configuration message may define a reporting criteria which will trigger the UE 110 to communicate a measurement report to the Node B 120. When the reporting criteria is fulfilled (e.g., occurrence of a criteria/event defined by the measurement configuration message) the UE 110 communicates a measurement report message to the Node B 120, where the measurement report includes the results of the measurement(s) and can further include the measurement ID. The reporting criteria may, for example, be event-triggered or periodic reporting. An event-triggered reporting criteria causes the UE 110 to send a report when a defined event occurs (e.g., the received Reference Signal Received Power (RSRP) is above a reporting threshold value defined by the reporting criteria). A periodic reporting criteria cause the UE 110 to send a report at a defined periodic rate (i.e., regardless of various unrelated events such as whether RSRP is above a reporting threshold).

An example reporting criteria that the measurement configuration message may define can include a threshold value that the UE 110 compares to a measurement to determine whether to communicate the measurement in a measurement report to the network node 120. By further example, the UE 110 may compare a measured signal strength to a threshold value defined by the measurement configuration message to determine whether (when) to communicate the measurement report to the network node 120 (e.g., communicate the measurement report in response to the measurement of signal strength exceeding a specified threshold).

The UE 110 communicates (block 308) a measurement report to the Node B 120, such as responsive to occurrence of an event defined by the measurement configuration message (e.g., responsive to comparison of a measured signal strength to a specified threshold). The Node B 120 receives (block 206) the measurement report. The RNC 130 can use the measurement report for mobility management of the UE 110.

In one embodiment, the measurement report generated by the UE 110 may include a bitmap, where for each frequency configured by the measurement configuration message the UE 110 sends one bit (e.g., when the measurement configuration message configures 3 frequencies, the UE 110 sends 3 bits in the measurement report). Each bit is set to logic "0" or "1" responsive to whether the corresponding measurement value is below or above the reporting threshold. In other words, the measurement report can include one bit per frequency measured that indicates whether the measurement of signal strength of the frequency exceeded the threshold value.

The UE 110 may, for example, measure a reference signal received from the Node B 120 and/or another Node B or radio base station, such as while in CELL_FACH state, to determine a Reference Signal Received Power (RSRP) value and/or a Reference Signal Received Quality (RSRQ) value. Whether the UE 110 determines RSRP or RSRQ may be controlled by information defined by the measurement configuration message.

RSRP is a RSSI type of measurement by the UE 110. The UE 110 measures RSRP as the linear average over the power contributions (in [W]) of the resource elements that carry cell-specific reference signals within certain measurement frequency bandwidth (e.g., particular frequency bandwidth that can be defined by the measurement configuration message). For RSRP measurement, the cell-specific reference signals R₀ can be used. If the UE 110 can reliably detect that R₁ is available it may use R₁ in addition to R₀ to measure RSRP.

The reference point for RSRP may be the antenna connector of the UE 110. If receiver diversity is used by the UE 110, the reported RSRP value (i.e., in the measurement report) shall, in one embodiment, not be lower than the corresponding RSRP value of any of the individual diversity branches.

In an embodiment, RSRP measurement is used in both RRC_IDLE intra-frequency, RRC_IDLE inter-frequency, RRC_CONNECTED intra-frequency, and/or RRC_CONNECTED intra-frequency modes, such as during procedures by the UE 110 for cell selection and cell reselection in idle mode.

RSRQ is a C/I type of measurement and indicates the quality of the received reference signal. It can be measured as (N*RSRP)/(E-UTRA Carrier RSSI), where N is the number or resource blocks of the E-UTRA carrier RSSI measurement bandwidth. The measurements of the numerator and denominator are made over the same set of resource blocks.

The E-UTRA carrier Receive Strength Signal Indicator (RSSI) measures the linear average of the total received power (in [W]) observed only in OFDM symbols containing reference symbols for antenna port 0 (i.e., OFDM symbol 0 & 4 in a slot) in the measurement bandwidth over N resource blocks by the UE 110 from all sources. The total received power of the carrier RSSI includes the power from co-channel serving & non-serving cells, adjacent channel interference, thermal noise, etc. If higher-layer signalling indicates certain subframes for performing RSRQ measurements, than the RSSI can be measured over all OFDM symbols in the indicated subframes.

The reference point for RSRQ may be the antenna connector of the UE 110. If receiver diversity is used by the UE 110, the reported RSRQ value (i.e., in the measurement report) shall, in one embodiment, not be lower than the corresponding RSRQ value of any of the individual diversity branches.

In an embodiment, RSRQ measurement is used in RRC_IDLE intra-frequency, RRC_IDLE inter-frequency, RRC_CONNECTED intra-frequency, and/or RRC_CONNECTED intra-frequency modes, such as during procedures by the UE 110 for cell selection and cell reselection in idle mode.

The RSRQ measurement provides additional information when RSRP is not sufficient to make a reliable handover or cell reselection decision. The UE 110 may measure RSRP and/or RSRQ (e.g., responsive to information defined by the measurement configuration message) and the Node B 110 may use RSRP and/or RSRQ reported in the measurement report to make mobility management decisions for the UE 110.

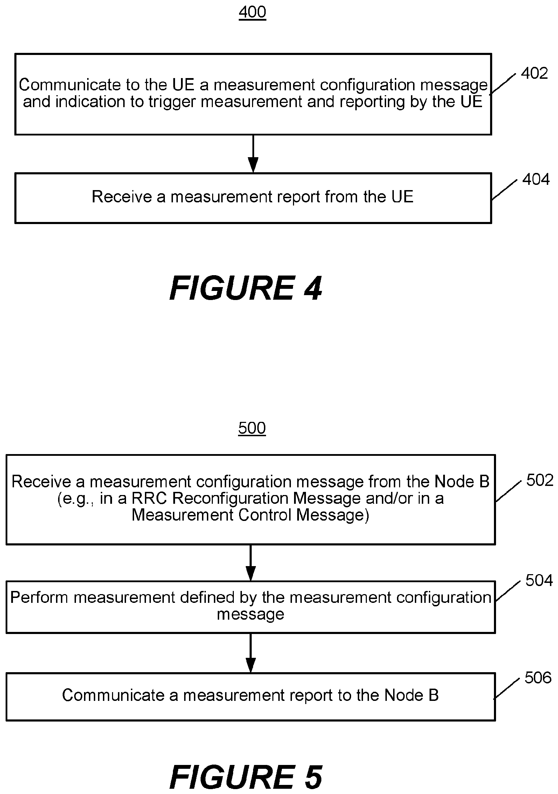

In some other embodiments, the measurement configuration message and the explicit indication to trigger measurement and reporting are communicated together in a same message. Figure 4 illustrates operations and methods 400 that can be performed by the Node B 120, and Figure 5 illustrates corresponding operations and methods 500 that can be performed by the UE 110.

Referring to Figures 4 and 5, the Node B 120 communicates (block 402) a measurement configuration message to the UE 110, which can be communicated as part of a RRC Reconfiguration Message, a Measurement Control Message, and/or another RRC message, such as a Cell Change Order.

The UE 110 correspondingly receives (block 502) the measurement configuration message which it uses to control the type of measurement it performs, and further uses the message as an explicit indication that it is to proceed with performing a present measurement (one or more measurements) (block 504) defined by the measurement configuration message.

The measurement configuration message may define a reporting criteria which will trigger the UE 110 to communicate a measurement report to the Node B 120. When the reporting criteria is fulfilled (e.g., occurrence of a criteria/event defined by the measurement configuration message) the UE 110 communicates a measurement report message to the Node B 120, where the measurement report includes the results of the measurement(s) and can further include the measurement ID. An example reporting criteria that the measurement configuration message may define can include a threshold value that the UE 110 compares to a measurement to determine whether to communicate the measurement in a measurement report to the network node (120). The UE 110 may compare a measured signal strength to a threshold value defined by the measurement configuration message to determine whether (when) to communicate the measurement report to the network node (120) (e.g., communicate the measurement report in response to the measurement of signal strength exceeding a specified threshold). For example, the reporting criteria may trigger the UE 110 to communicate the measurement report in response to its measured quality of any cell on a configured E-UTRA frequency (e.g., a E-UTRA frequency defined by the measurement report or otherwise defined for the UE 110) exceeding a threshold value defined by the measurement report (e.g., defined by an information element of the measurement report).

As explained above, the measurement report generated by the UE 110 may include a bitmap, where for each frequency configured by the measurement configuration message the UE 110 sends one bit (e.g., when the measurement configuration message configures 3 frequencies, the UE 110 sends 3 bits in the measurement report). Each bit is set to logic "0" or "1" responsive to whether the corresponding measurement value is below or above the reporting threshold. In other words, the measurement report can include one bit per frequency measured that indicates whether the measurement of signal strength of the frequency exceeded the threshold value.

The UE 110 communicates (block 506) the measurement report to the Node B 120. The Node B 120 receives (block 404) the measurement report. The RNC 130 can use the measurement report for mobility management of the UE 110, such as described above for Block 206 of Figure 2.

In one embodiment, when the measurements are performed repeatedly (e.g., periodically), the UE 110 ceases making further measurements based on its communication of the measurement report to the network node 120. In this manner, the UE 110 makes a "one-shot" report of the measurement result when the reporting criteria is fulfilled.

Moreover, while the UE 110 is configured to repetitively communicate measurement reports to the Node B 120 on a periodic or other defined basis, the UE 110 may be triggered by a reporting criteria defined by the measurement configuration message to make an additional "one-shot" measurement report of a measurement result to the Node B 120. In this manner, the UE 110 can be controlled to communicate an additional measurement report to the Node B 120.

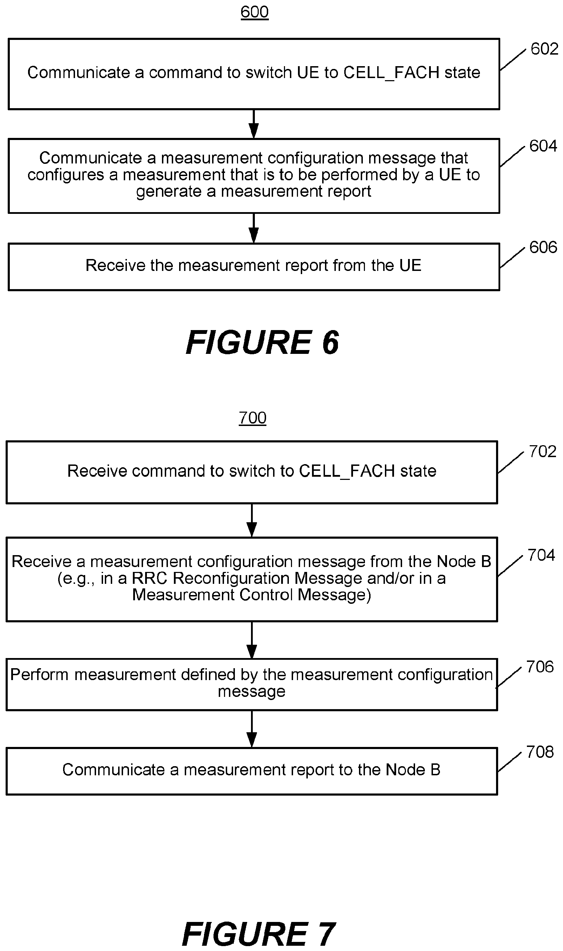

In some other embodiments, the UE 110 is controlled by one message to perform the measurement and controlled by another separate message to communicate the measurement report to the Node B 120. Figure 6 illustrates operations and methods 600 that can be performed by the Node B 120, and Figure 7 illustrates corresponding operations and methods 700 that can be performed by the UE 110.

Referring to Figures 6 and 7, the Node B 120 communicates (block 602) a command to the UE 110 to switch to the CELL_FACH state, where the command is generated by the RNC 130 or another network node of the system 100. The UE 110 receives (block 702) the command to switch to the CELL_FACH state, and performs a switch from one state to CELL_FACH state (e.g., Idle mode to Connected Mode CELL_FACH state, CELL_DCH state to CELL FACH state, URA_PCH state to CELL_FACH state, or CELL_PCH to CELL_FACH state). The Node B 120 communicates (block 604) a measurement configuration message (generated by the RNC 130) that configures a one-time measurement that is to be performed by the UE 110 to generate a measurement report. The UE receives (block 704) the measurement configuration message and responds by performing (block 706) the measurement defined by the measurement configuration message.

As explained above, the measurement configuration message may define a reporting criteria which will trigger the UE 110 to communicate a measurement report to the Node B 120. When the reporting criteria is fulfilled (e.g., occurrence of a criteria/event defined by the measurement configuration message) the UE 110 communicates a single measurement report message to the Node B 120, where the measurement report includes the results of the measurement(s) and can further include the measurement ID. An example reporting criteria that the measurement configuration message may define can include a threshold value that the UE 110 compares to a measurement to determine whether to communicate the measurement in a single measurement report to the network node 120. By further example, the UE 110 may compare a measured signal strength to a threshold value defined by the measurement configuration message to determine whether (when) to communicate the measurement report to the Node B 120 (e.g., communicate the measurement report in response to the measurement of signal strength exceeding a specified threshold) for use by the RNC 130.

When performing the measurement, the UE 110 may be configured to perform a concentrated scan of E-UTRA (IRAT) frequencies that are identified by the measurement configuration message. The concentrated measurement scan of frequencies may be performed as fast as possible, instead of waiting for a next one of a pattern of FACH measurement occasions defined for measurements in CELL_FACH. Upon completing the concentrated measurement scan of frequencies, the UE 110 sends a combined measurement report to the Node B 120 containing information about available E-UTRA frequencies.

As explained above, the measurement report generated by the UE 110 may include a bitmap, where for each frequency configured by the measurement configuration message the UE 110 sends one bit (e.g., when the measurement configuration message configures 3 frequencies, the UE 110 sends 3 bits in the measurement report). Each bit is set to logic "0" or "1" responsive to whether the corresponding measurement value is below or above the reporting threshold. In other words, the measurement report can include one bit per frequency measured that indicates whether the measurement of signal strength of the frequency exceeded the threshold value.

The UE 110 communicates (block 708) the measurement report to the Node B 120, e.g., responsive to the defined reporting criteria being satisfied. The network node 120 correspondingly receives (block 606) the measurement report from the UE 110. The measurement report can be used by the RNC 130 for mobility management of the UE 110, such as described above for block 206 of Figure 2.

Managing when and how measurements are performed and communicated from a UE to the network in this manner may conserved battery power within the UE, by performing measurements and reporting when requested by the network. When the network desires measurement information, the network can, at that time, request the UE to perform measurements and to report them. This approach may also reduce the signaling load in the network and reduce the UL interference due to signaling. Moreover, this approach may assist the network with requesting measurement reports during a time when it is determined that there are sufficient available resources in the network.

Because the measurement can be performed quickly upon request, the service interruption can be reduced and the measured result can be quickly delivered to the network.

Because the network controls when the one-shot measurement is performed, the network can utilize its knowledge of activity level in the UE. The network will thus be able to choose a time when the measurement will impact the service the least.

Network triggered one-time measurement in CELL_FACH can provide fast information to UTRAN on whether there is coverage, and based on that information the network can make decisions for whether to trigger a redirection to another network.

### Example User Equipment Node and Network Node Configurations

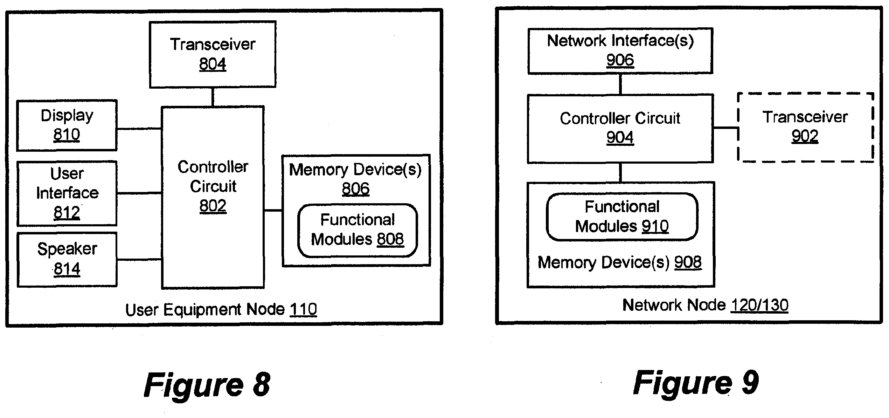

Figure 8 is a block diagram of the user equipment node (UE) 110 of Figure 1 that is configured according to some embodiments. The UE 110 includes a transceiver 804, a controller circuit 802, and a memory device(s) 806 containing functional modules 808. The UE 110 may further include a display 810, a user input interface 812, and a speaker 714.

The transceiver 804 (e.g., WCDMA, LTE, or other cellular transceiver, Bluetooth transceiver, WiFi transceiver, WiMax transceiver, etc.) is configured to communicate with the Node B 120 or another network node of the communication system of Figure 1 or another communication system. The controller circuit 802 may include one or more data processing circuits, such as a general purpose and/or special purpose processor (e.g., microprocessor and/or digital signal processor). The controller circuit 802 is configured to execute computer program instructions from the functional modules 808 of the memory device(s) 806, described below as a computer readable medium, to perform at least some of the operations and methods described herein as being performed by a UE.

Figure 9 is a block diagram of a network node, which may be the Node B 120 and/or the RNC 130 of Figure 1, or another network node that is configured according to some embodiments. The network node 120/130 can include a transceiver 902, a network interface(s) 906, a controller circuit 904, and/or memory device(s) 908 containing functional modules 910.

The transceiver 902 (e.g., WCDMA, LTE, or other cellular transceiver, Bluetooth transceiver, WiFi transceiver, WiMax transceiver, etc.) is configured to communicate with the UE 110 or another node of the communication system of Figure 1 or another communication system. The controller circuit 804 may include one or more data processing circuits, such as a general purpose and/or special purpose processor (e.g., microprocessor and/or digital signal processor). The controller circuit 904 is configured to execute computer program instructions from the functional modules 910 of the memory device(s) 908, described below as a computer readable medium, to perform at least some of the operations and methods described herein as being performed by the Node B 120, the RNC 130, and/or another network node. The network interface 906 communicates with the RNC 130 when residing in the Node B 120, or communicates with the Node B 120 and/or the core network 140 when residing in the RNC 130.

### Further Summary of Various Embodiments

Some embodiments are directed to methods and operations by a network node to control measurements by a user equipment node (UE) in a communications system. The network node communications a measurement configuration message to the UE that configures at least one measurement that is to be performed by the UE. The network node communicates an explicit indication to the UE to trigger performance of the configured measurement and communication of a measurement report to the network node. The network node is further configured to receive the measurement report.

In a further embodiment, the network node communicates the measurement configuration message to the UE based on the UE operating in a CELL_FACH state.

In a further embodiment, the network node communicates the measurement configuration message to the UE in a RRC reconfiguration message.

In a further embodiment, the network node communicates the measurement configuration message to the UE in a Measurement Control Message.

In a further embodiment, the network node communicates the explicit indication to the UE in a Measurement Control Message.

In a further embodiment, the network node communicates the explicit indication to the UE in a Cell Change Order.

In a further embodiment, the network node communicates the explicit indication to the UE within a same message that communicates the measurement configuration message.

Some other embodiments are directed to methods and operations by a UE that communicates with a network node in a communications system. The UE receives a measurement configuration message from the network node that configures at least one measurement that is to be performed by the UE. The UE receives an explicit indication from the network node, and responds to the explicit indication by performing the configured measurement, and communicating a measurement report based on the configured measurement to the network node.

In a further embodiment, the UE is operating in a CELL_FACH state.

In a further embodiment, the UE receives the measurement configuration message in a RRC reconfiguration message.

In a further embodiment, the UE receives the measurement configuration message in a Measurement Control Message.

In a further embodiment, the UE receives the explicit indication in a Measurement Control Message.

In a further embodiment, the UE receives the explicit indication in a Cell Change Order.

In a further embodiment, the UE receives the explicit indication within a same message in which it receives the measurement configuration message.

Some other embodiments are directed to methods and operations by a UE that communicates with a network node in a communications system. The UE receives a measurement configuration message from the network node that configures at least one measurement that is to be performed by the UE. The UE receives a command from the network node to switch to a CELL_FACH state, and to respond thereto by performing the configured measurement. The UE receives an explicit indication from the network node, and responds to the explicit indication by communicating a measurement report based on the configured measurement to the network node.

### Abbreviations

A list of abbreviations used in the present disclosure is provided below for ease of reference of the reader:
3GPP 3rd Generation Partnership Project
DCHDedicated Channel
DL Downlink
E-DCH Enhanced Uplink Dedicated Channel
E-UTRA Evolved Universal Terrestrial Radio Access
FACH Forward Access Channel
GSMGlobal System for Mobile Communications
IRAT Inter Radio Access Technology
LTE Long-Term Evolution
RACH Random Access Channel
RAT Radio Access Technology
RRC Radio Resource Control
UE User Equipment Node
UL Uplink
UTRAN Universal Terrestrial Radio Access Network

### Further Definitions and Embodiments

In the above-description of various embodiments of the present invention, it is to be understood that the terminology used herein is for the purpose of describing particular embodiments only and is not intended to be limiting of the invention. Unless otherwise defined, all terms (including technical and scientific terms) used herein have the same meaning as commonly understood by one of ordinary skill in the art to which this invention belongs. It will be further understood that terms, such as those defined in commonly used dictionaries, should be interpreted as having a meaning that is consistent with their meaning in the context of this specification and the relevant art and will not be interpreted in an idealized or overly formal sense unless expressly so defined herein.

When an element is referred to as being "connected", "coupled", "responsive", or variants thereof to another element, it can be directly connected, coupled, or responsive to the other element or intervening elements may be present. In contrast, when an element is referred to as being "directly connected", "directly coupled", "directly responsive", or variants thereof to another element, there are no intervening elements present. Like numbers refer to like elements throughout. Furthermore, "coupled", "connected", "responsive", or variants thereof as used herein may include wirelessly coupled, connected, or responsive. As used herein, the singular forms "a", "an" and "the" are intended to include the plural forms as well, unless the context clearly indicates otherwise. Well-known functions or constructions may not be described in detail for brevity and/or clarity. The term "and/or" includes any and all combinations of one or more of the associated listed items.

As used herein, the terms "comprise", "comprising", "comprises", "include", "including", "includes", "have", "has", "having", or variants thereof are open-ended, and include one or more stated features, integers, elements, steps, components or functions but does not preclude the presence or addition of one or more other features, integers, elements, steps, components, functions or groups thereof. Furthermore, as used herein, the common abbreviation "e.g.", which derives from the Latin phrase "exempli gratia," may be used to introduce or specify a general example or examples of a previously mentioned item, and is not intended to be limiting of such item. The common abbreviation "i.e.", which derives from the Latin phrase "id est," may be used to specify a particular item from a more general recitation.

Example embodiments are described herein with reference to block diagrams and/or flowchart illustrations of computer-implemented methods, apparatus (systems and/or devices) and/or computer program products. It is understood that a block of the block diagrams and/or flowchart illustrations, and combinations of blocks in the block diagrams and/or flowchart illustrations, can be implemented by computer program instructions that are performed by one or more computer circuits. These computer program instructions may be provided to a processor circuit of a general purpose computer circuit, special purpose computer circuit, and/or other programmable data processing circuit to produce a machine, such that the instructions, which execute via the processor of the computer and/or other programmable data processing apparatus, transform and control transistors, values stored in memory locations, and other hardware components within such circuitry to implement functions/acts specified in the block diagrams and/or flowchart block or blocks, and thereby create means, functionality and/or structure to implement functions/acts specified in the block diagrams and/or flowchart block(s).

These computer program instructions may also be stored in a tangible computer-readable medium that can direct a computer or other programmable data processing apparatus to function in a particular manner, such that the instructions stored in the computer-readable medium produce an article of manufacture including instructions which implement the functions/acts specified in the block diagrams and/or flowchart block or blocks.

A tangible, non-transitory computer-readable medium may include an electronic, magnetic, optical, electromagnetic, or semiconductor data storage system, apparatus, or device. More specific examples of the computer-readable medium would include the following: a portable computer diskette, a random access memory (RAM) circuit, a read-only memory (ROM) circuit, an erasable programmable read-only memory (EPROM or Flash memory) circuit, a portable compact disc read-only memory (CD-ROM), and a portable digital video disc read-only memory (DVD/BlueRay).

The computer program instructions may also be loaded onto a computer and/or other programmable data processing apparatus to cause a series of operational steps to be performed on the computer and/or other programmable apparatus to produce a computer-implemented process such that the instructions which execute on the computer or other programmable apparatus provide steps to implement the functions/acts specified in the block diagrams and/or flowchart block or blocks. Accordingly, embodiments of the present invention may be embodied in hardware and/or in software (including firmware, resident software, micro-code, etc.) that runs on a processor such as a digital signal processor, which may collectively be referred to as "circuitry," "a module" or variants thereof.

It should also be noted that in some alternate implementations, the functions/acts noted in the blocks may occur out of the order noted in the flowcharts. For example, two blocks shown in succession may in fact be executed substantially concurrently or the blocks may sometimes be executed in the reverse order, depending upon the functionality/acts involved. Moreover, the functionality of a given block of the flowcharts and/or block diagrams may be separated into multiple blocks and/or the functionality of two or more blocks of the flowcharts and/or block diagrams may be at least partially integrated. Finally, other blocks may be added/inserted between the blocks that are illustrated, and/or blocks/operations may be omitted without departing from the scope of the invention. Moreover, although some of the diagrams include arrows on communication paths to show a primary direction of communication, it is to be understood that communication may occur in the opposite direction to the depicted arrows.

Many different embodiments have been disclosed herein, in connection with the above description and the drawings. It will be understood that it would be unduly repetitious and obfuscating to literally describe and illustrate every combination and subcombination of these embodiments. Accordingly, the present specification, including the drawings, shall be construed to constitute a complete written description of various example combinations and subcombinations of embodiments and of the manner and process of making and using them, and shall support claims to any such combination or subcombination.

Many variations and modifications can be made to the embodiments without departing from the scope of the invention as defined by the claims. All such variations and modifications are intended to be included herein within the scope of the invention as defined by the claims.

## Claims

1. A method performed by a user equipment node, UE, (110) to perform measurements in a communications system, the method comprising:
receiving (702) a command from a network node (130) to switch to CELL_FACH state;
receiving (502, 704) a measurement configuration message from the network node (130) that configures a measurement that is to be performed by the UE (110) while the UE (110) is operating in the CELL_FACH state to generate a measurement report, the measurement configuration message communicated as an explicit indication from the network node (130) to proceed with performing the measurement defined by the measurement configuration message to generate the measurement report;
performing (504, 706) the measurement defined by the measurement configuration message in response to receipt of the measurement configuration message; and
communicating (506,708) the measurement report based on the measurement to the network node (130), and where the measurement configuration message triggers the UE (110) to communicate the measurement report to the network node (130) when the UE receives the explicit indication.

2. The method of Claim 1 of operating the UE (110), wherein the measurement configuration message is received (502, 704) in a Radio Resource Control, RRC, reconfiguration message.

3. The method of Claim 1 of operating the UE (110), wherein the explicit indication is received (304) in a Measurement Control Message.

4. The method of Claim 1 of operating the UE (110), wherein the explicit indication is received (304) in a Cell Change Order.

5. The method of any of Claims 1-4 of operating the UE (110), wherein:
the measurement configuration message identifies one or more of the following types of measurements to be performed by the UE (110):
intra-frequency measurements on downlink, DL, physical channels at the same frequency as an active set;
inter-frequency measurements on DL physical channels at frequencies that differ from the frequency of the active set;
inter-system measurements on DL physical channels belonging to another radio access system;
traffic volume measurements on uplink, UL, traffic volume;
DL transport block error rate;
UE transmission power; and
UE received signal level; and
the UE (110) performs (504, 706) the one or more of the types of measurements identified by the measurement configuration message.

6. A user equipment node, UE, (110) for performing measurements in a communications system, wherein the UE (110) is configured to:
receive a command from a network node (130) to switch to CELL_FACH state;
receive a measurement configuration message from the network node (130) that configures a measurement that is to be performed by the UE (110) while the UE (110) is operating in the CELL_FACH state to generate a measurement report, the measurement configuration message communicated as an explicit indication from the network node (130) to proceed with performing the measurement defined by the measurement configuration message to generate the measurement report;
perform the measurement defined by the measurement configuration message in response to receipt of the measurement configuration message; and
communicate the measurement report based on the measurement to the network node (130), and the UE being configured such that the measurement configuration message triggers the UE (110) to communicate the measurement report to the network node (130) when the UE receives the explicit indication.

## Patentansprüche

1. Verfahren, das durch einen Benutzereinrichtungsknoten, UE, (110) durchgeführt wird, um Messungen in einem Kommunikationssystem durchzuführen, wobei das Verfahren umfasst:
Empfangen (702) eines Befehls von einem Netzwerkknoten (130), in den CELL_FACH-Zustand umzuschalten;
Empfangen (502, 704) einer Messungskonfigurationsnachricht vom Netzwerkknoten (130), die eine Messung konfiguriert, die durch die UE (110) durchzuführen ist, während die UE (110) im CELL_FACH-Zustand arbeitet, um einen Messungsbericht zu erzeugen, wobei die Messungskonfigurationsnachricht als ein ausdrücklicher Hinweis vom Netzwerkknoten (130) übermittelt wird, mit dem Durchführen der durch die Messungskonfigurationsnachricht definierten Messung fortzufahren, um den Messungsbericht zu erzeugen;
Durchführen (504, 706) der durch die Messungskonfigurationsnachricht definierten Messung als Antwort auf den Empfang der Messungskonfigurationsnachricht; und
Übermitteln (506, 708) des auf der Messung beruhenden Messungsberichts an den Netzwerkknoten (130), und wobei die Messungskonfigurationsnachricht die UE (110) veranlasst, den Messungsbericht an den Netzwerkknoten (130) zu übermitteln, wenn die UE den ausdrücklichen Hinweis empfängt.

2. Verfahren nach Anspruch 1 zum Betreiben der UE (110), worin die Messungskonfigurationsnachricht in einer Neukonfigurationsnachricht der Funkressourcensteuerung, RRC, empfangen (502, 704) wird.

3. Verfahren nach Anspruch 1 zum Betreiben der UE (110), worin der ausdrückliche Hinweis in einer Messungssteuerungsnachricht empfangen (304) wird.

4. Verfahren nach Anspruch 1 zum Betreiben der UE (110), worin der ausdrückliche Hinweis in einem Zellenwechselbefehl empfangen (304) wird.

5. Verfahren nach einem der Ansprüche 1 bis 4 zum Betreiben der UE (110), worin:
die Messungskonfigurationsnachricht einen oder mehrere der folgenden Typen von Messungen angibt, die durch die UE (110) durchzuführen sind:
frequenzinteme Messungen an physischen Kanälen der Abwärtsstrecke, DL, bei der gleichen Frequenz wie eine aktive Menge;
frequenzübergreifende Messungen an physischen DL-Kanälen bei Frequenzen, die sich von der Frequenz der aktiven Menge unterscheiden;
systemübergreifende Messungen an physischen DL-Kanälen, die zu einem anderen Funkzugangssystem gehören;
Verkehrsvolumenmessungen am Verkehrsvolumen der Aufwärtsstrecke, UL;
DL-Transportblockfehlerrate;
UE-Sendeleistung; und
UE-Empfangssignalpegel; und
die UE (110) den einen oder die mehreren der Typen von Messungen durchführt (504, 706), die durch die Messungskonfigurationsnachricht angegeben werden.

6. Benutzereinrichtungsknoten, UE, (110) zum Durchführen von Messungen in einem Kommunikationssystem, worin die UE (110) dafür konfiguriert ist:
einen Befehl, in einen CELL_FACH-Zustand umzuschalten, von einem Netzwerkknoten (130) zu empfangen;
eine Messungskonfigurationsnachricht vom Netzwerkknoten (130) zu empfangen, die eine Messung konfiguriert, die durch die UE (110) durchzuführen ist, während die UE (110) im CELL_FACH-Zustand arbeitet, um einen Messungsbericht zu erzeugen, wobei die Messungskonfigurationsnachricht vom Netzwerkknoten (130) als ein ausdrücklicher Hinweis übermittelt wird, mit dem Durchführen der durch die Messungskonfigurationsnachricht definierten Messung fortzufahren, um den Messungsbericht zu erzeugen;
die durch die Messungskonfigurationsnachricht definierte Messung als Antwort auf den Empfang der Messungskonfigurationsnachricht durchzuführen; und
den auf der Messung beruhenden Messungsbericht an den Netzwerkknoten (130) zu übermitteln, und die UE so konfiguriert ist, dass die Messungskonfigurationsnachricht die UE (110) veranlasst, den Messungsbericht an den Netzwerkknoten (130) zu übermitteln, wenn die UE den ausdrücklichen Hinweis empfängt.

## Revendications

1. Procédé réalisé par un noeud d'équipement d'utilisateur, UE (110), pour réaliser des mesures dans un système de communication, le procédé comprenant :
la réception (702) d'une commande en provenance d'un noeud de réseau (130) pour effectuer une commutation vers un état CELL_FACH ;
la réception (502, 704) d'un message de configuration de mesure en provenance du noeud de réseau (130) qui configure une mesure qui doit être réalisée par l'UE (110) tandis que l'UE (110) est en train de fonctionner dans l'état CELL_FACH de manière à générer un rapport de mesure, le message de configuration de mesure étant communiqué en tant qu'indication explicite depuis le noeud de réseau (130) de manière à poursuivre la réalisation de la mesure qui est définie par le message de configuration de mesure afin de générer le rapport de mesure ;
la réalisation (504, 706) de la mesure qui est définie par le message de configuration de mesure en réponse à la réception du message de configuration de mesure ; et
la communication (506, 708) du rapport de mesure sur la base de la mesure au noeud de réseau (130), et dans lequel le message de configuration de mesure déclenche l'UE (110) de sorte qu'il communique le rapport de mesure au noeud de réseau (130) lorsque l'UE reçoit l'indication explicite.

2. Procédé selon la revendication 1 de fonctionnement de l'UE (110), dans lequel le message de configuration de mesure est reçu (502, 704) dans un message de reconfiguration de commande de ressource radio, RRC.

3. Procédé selon la revendication 1 de fonctionnement de l'UE (110), dans lequel l'indication explicite est reçue (304) dans un message de commande de mesure.

4. Procédé selon la revendication 1 de fonctionnement de l'UE (110), dans lequel l'indication explicite est reçue (304) dans un ordre de changement de cellule.

5. Procédé selon l'une quelconque des revendications 1 à 4 de fonctionnement de l'UE (110), dans lequel :
le message de configuration de mesure identifie un ou plusieurs des types qui suivent de mesures à réaliser par l'UE (110) ;
des mesures intra-fréquence sur des canaux physiques de liaison descendante, DL, à la même fréquence qu'un jeu actif ;
des mesures inter-fréquence sur des canaux physiques DL à des fréquences qui diffèrent de la fréquence du jeu actif ;
des mesures inter-système sur des canaux physiques DL qui appartiennent à un autre système d'accès radio ;
des mesures de volume de trafic portant sur un volume de trafic de liaison montante, UL ;
un taux d'erreurs sur les blocs de transport de DL ;
une puissance de transmission d'UE ; et
un niveau de signal reçu d'UE ; et
l'UE (110) réalise (504, 706) les un ou plusieurs des types de mesures qui sont identifiés par le message de configuration de mesure.

6. Noeud d'équipement d'utilisateur, UE, (110) pour réaliser des mesures dans un système de communication, dans lequel l'UE (110) est configuré de manière à ce qu'il réalise les opérations qui suivent :
la réception d'une commande en provenance d'un noeud de réseau (130) pour effectuer une commutation vers un état CELL_FACH ;
la réception d'un message de configuration de mesure en provenance du noeud de réseau (130) qui configure une mesure qui doit être réalisée par l'UE (110) tandis que l'UE (110) est en train de fonctionner dans l'état CELL_FACH de manière à générer un rapport de mesure, le message de configuration de mesure étant communiqué en tant qu'indication explicite depuis le noeud de réseau (130) de manière à poursuivre la réalisation de la mesure qui est définie par le message de configuration de mesure afin de générer le rapport de mesure ;
la réalisation de la mesure qui est définie par le message de configuration de mesure en réponse à la réception du message de configuration de mesure ; et
la communication du rapport de mesure sur la base de la mesure au noeud de réseau (130), et l'UE étant configuré de telle sorte que le message de configuration de mesure déclenche l'UE (110) de sorte qu'il communique le rapport de mesure au noeud de réseau (130) lorsque l'UE reçoit l'indication explicite.
